# EUROPEAN PATENT SPECIFICATION

(11) **EP 0 517 965 B1**
(45) Date of publication and mention of the grant of the patent: **04.09.1996**
(21) Application number: 91201501.3
(22) Date of filing: 13.06.1991
(51) Int. Cl.: B04C 5/14, C08B 30/04

(54) **Hydrocyclone for recovering potato starch**
Hydrozyklon zur Gewinnung von Kartoffelstärke
Hydrocyclone pour l'obtention d'amidon de pomme de terre

(43) Date of publication of application: 16.12.1992
(73) Proprietor: Coöperatieve Verkoop- en Productievereniging van Aardappelmeel en Derivaten 'AVEBE' B.A., NL-9641 JA Veendam (NL)
(72) Inventor: Zeevalkink, Herman Albertus, NL-9756 BB Glimmen (NL)
(74) Representative: Smulders, Theodorus A.H.J., Ir.

(56) References cited:
- WO-A-87/06502
- FR-A- 1 134 443
- FR-A- 1 220 426
- GB-A- 708 673
- GB-A- 2 214 841
- SOVIET INVENTIONS ILLUSTRATED Section Ch, Week E31, 15 September 1982 Derwent Publications Ltd., London , GB; Class J, AN 65389 E/31 & SU-A-869 821 ( KUZNT COAL ENRICH ) 7 October 1981

## Description

The invention relates to a process for recovering potato starch from reduced (e.g. grated) potatoes by means of a hydrocyclone, which has a modified construction compared with conventional hydrocyclone constructions. The present hydrocyclone comprises a cylindrical portion provided with at least one tangentially directed supply duct and a central overflow orifice, and a conical portion with a central discharge orifice, said conical portion connecting coaxially to said cylindrical portion, and is characterized in that said discharge orifice is fitted with a cylindrical intermediate member and a conical nozzle (diffusor) connecting to said intermediate member.

Hydrocyclones are used for separating mixtures of solid particles present in liquid suspensions. When for this purpose a hydrocyclone with effective dimensions and an effective supply pressure is used, the larger solid particles will leave the hydrocyclone mainly through the discharge orifice and the great majority of the fine solid particles are discharged through the overflow orifice.

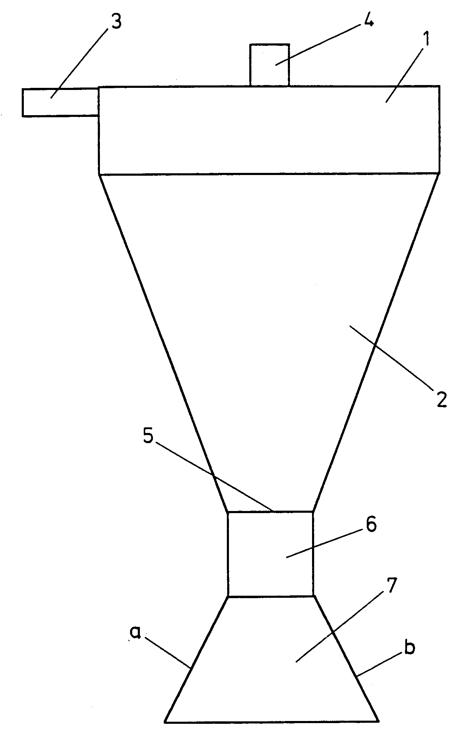

The figure in the accompanying drawing is a schematic axial section of the hydrocyclone which is used according to the invention for recovering potato starch. There is shown a cylindrical portion 1 with a conical portion 2 connecting thereto, a potato starch suspension supply duct 3, an overflow orifice 4 and a discharge orifice 5. AS stated, the hydrocyclone for use according to the invention is characterized by the presence of a cylindrical intermediate member 6 having connected thereto a conical nozzle 7, sometimes referred to by the term 'diffusor'. The angle formed by lines a and b is preferably between 5 and 35°.

WO-A-87/06502 discloses a hydrocyclone wherein the terminal portion of the conical portion is fitted with a cylindical intermediate member 16 and a conical nozzle 18. The hydrocyclone is used for separating oil from oily water and the conical portion comprises two different conical portions 12a and 14.

The shape and dimensions of the hydrocyclone for use according to the invention are selected depending on the nature of the suspension and the treatment it is to be subjected to. It is, for instance, well known that for treating suspensions containing very small particles smaller hydrocyclones must be used than for treating suspensions containing relatively larger particles. However, since a small hydrocyclone has only a minor capacity, for treating suspensions with small solid particles often larger numbers of hydrocyclones are required. Such is the case in the treatment of starch suspensions in a potato starch factory. In such cases, conventionally a plurality of hydrocyclones are combined into a constructive unit. Such units are sometimes referred to as manifold hydrocyclones, multihydrocyclones or hydrocyclone batteries. It will be clear that the invention can also be used in such hydrocyclone installations. The hydrocyclones can be made of all such materials as are allowed by the relevant laws and regulations.

The use of hydrocyclones according to the invention for recovering potato starch from reduced potatoes has a number of important specific advantages. The potato starch that flows through the discharge orifice has a great velocity. By means of the conical nozzle this velocity is converted to pressure. This elevated pressure can be used for feeding a next hydrocyclone, in which the separation of the solid particles is continued. In this way, energy can be saved because less pressure needs to be provided by the pumps, which must carry the suspension through the hydrocyclone installation.

Further, with the hydrocyclones used according to the invention, a surprisingly clear-cut separation of the potato starch granules can be accomplished. This means that the overflow fraction contains relatively few large particles while the discharge fraction contains relatively few small particles. The construction of the hydrocyclones is such that they do not easily get clogged. The grated potato pulp obtained in the potato starch industry usually contains sand residues which as a result of their abrasive action may cause corrosion and wear of the discharge orifice. The cylindrical intermediate member ensures that the diameter of the discharge orifice remains constant. Without this intermediate member there is a risk that in the course of time the discharge orifice will widen as a result of corrosion (wear). The intermediate member thus functions as a wear-prevention member. Further, the cylindrical intermediate member has a favourable influence on the controllability and stability of the hydrocyclone.

The hydrocyclone is utilized according to the invention in the recovery of potato starch from potatoes. For this purpose often a combination of a multiplicity of hydrocyclones is used. It has been found that such a hydrocyclone installation can handle starch suspensions with a high solid content, yielding an excellent separation which is better than in the hydrocyclones used heretofore.

## Claims

1. A process to recover potato starch from a potato starch suspension wherein said suspension is supplied through at least one tangentially directed supply duct (3) to a cylindrical portion (1) of a hydrocyclone and is transported from said cylindrical portion (1) into a conical portion (2) connecting coaxially to said cylindrical portion (1), whereupon an overflow fraction of said suspension is removed through a central overflow orifice (4) forming part of said cylindrical portion (1), and a discharge fraction of said suspension is removed through a central discharge orifice (5) in the terminal portion of said conical portion (2), characterized in that the potato starch is recovered by further transporting said discharge fraction through a cylindrical intermediate member (6) fitted with said discharge orifice (5), and through a conical nozzle (7) connecting to said cylindrical intermediate member (6).

## Patentansprüche

1. Verfahren zur Gewinnung von Kartoffelstärke aus einer Kartoffelstärke-Suspension, wobei die Suspension über mindestens eine tangential ausgerichtete Zufuhrleitung (3) zu einem zylinderförmigen Teil (1) eines Hydrozyklons zugeführt und von dem zylinderförmigen Teil (1) in einen koaxial mit dem zylinderförmigen Teil (1) verbundenen kegelförmigen Teil (2) befördert wird, woraufhin eine Überlauffraktion der Suspension durch eine zentrale Überlauföffnung (4), die Bestandteil des zylinderförmigen Teils (1) ist, sowie eine Auslauffraktion der Suspension durch eine zentrale Auslauföffnung (5) im Endteil des kegelförmigen Teils (2) abgesondert wird, dadurch gekennzeichnet, daß die Kartoffelstärke durch weitere Beförderung der Auslauffraktion durch ein mit der Auslauföffnung (5) angebrachtes zylinderförmiges Zwischenelement (6) und durch eine kegelförmige Düse (7) gewonnen wird, die mit dem zylinderförmigen Zwischenelement (6) verbunden ist.

## Revendications

1. Un procédé permettant d'obtenir de l'amidon de pomme de terre à partir d'une suspension d'amidon de pomme de terre, dans lequel ladite suspension est amenée par au moins un conduit d'alimentation dirigé tangentiellement (3) à une portion cylindrique (1) d'un hydrocyclone et est transportée de ladite portion cylindrique (1) dans une portion conique (2) se raccordant coaxialement à ladite portion cylindrique (1), une fraction de trop-plein de ladite suspension étant retirée par un orifice de trop-plein central (4) faisant partie de ladite portion cylindrique (1), et une fraction d'évacuation de ladite suspension étant retirée par un orifice d'évacuation central (5) dans la portion terminale de ladite portion conique (2), caractérisé en ce que l'amidon de pomme de terre est obtenu en acheminant en outre ladite fraction d'évacuation à travers un membre intermédiaire cylindrique (6) adapté audit orifice d'évacuation (5), et à travers une buse conique (7) connectée audit membre intermédiaire cylindrique (6).
